# EUROPEAN PATENT APPLICATION

(11) **EP 0 995 683 A1**
(43) Date of publication of application: **26.04.2000**
(21) Application number: 99307700.7
(22) Date of filing: 29.09.1999
(51) Int. Cl.: B65B 51/30, B65B 9/12

(54) **Heatsealing and cutting mechanisms and container forming apparatus incorporating the same**

(30) Priority: 29.09.1998 US 162613; 18.12.1998 US 216607; 07.05.1999 US 307118
(71) Applicant: Arkmount Systems Inc., Toronto, Ontario M4V 1L5 (CA)
(72) Inventor: Tobolka, Stefan, Inglewood, Ontario L0N 1K0 (CA)
(74) Representative: Lyons, Andrew John

(57) **Abstract**

A heat sealing and cutting mechanism to form a heat seal and a cut across a tube of flexible packaging material includes a carrier (208) extending across the tube. Heat sealing means (226) is on said carrier to form a heat seal across the tube when the carrier is in contact with the tube. A first resistive wire (212) on the carrier is energizeable to cut the tube when the carrier is in contact with the tube after the heat seal has been formed. In one embodiment, the heat sealing means is in the form of at least one second resistive wire (226) on the carrier spaced from the first resistive wire. The at least one second resistive wire is energizeable to form a heat seal across the tube. In another embodiment, the carrier is in the form of a constant heat sealing bar (208') thereby to constitute the heat sealing means.

## Description

### Field Of The Invention

The present invention relates to packaging and in particular to a heat sealing and cutting mechanism and a container forming apparatus incorporating the same.

### Background Of The Invention

Form, fill and seal packaging machines to form fluid filled containers from a tube of flexible packaging material are known in the art. For example, U.S. Patent No. 4,747,253 to Schulte discloses an apparatus for the proportion of fluid contents during the manufacture of packing containers. The apparatus includes a filling tube extending into a tube of laminated packaging material to deliver milk into the tube of packaging material. A sealing mechanism below the filling tube forms transverse seals across the tube of packaging material to divide the tube of packaging material into individual cushion-shaped packing containers. Cuts are then formed along the seals to separate the individual packing containers. A gas feed pipe is connected to the filling tube to introduce gas into the tube of packaging material to express air before the individual packing containers are formed so that gas is trapped in each packing container as it is formed. The amount of gas introduced into the tube of packaging material is the same as the volume of the air space provided in the individual packing containers. Unfortunately, gas and/or air in the packing container tends to decrease the product life of the milk introduced into the packing containers

It has also been considered to use a resistive wire to form transverse seals across a fluid filled tube and cut the tube along the seals simultaneously to separate individual, fluid filled containers from the tube. The ends of the resistive wire are held by pivoting arms which are biased outwardly to apply a longitudinal bias to the resistive wire. In operation, when it is desired to seal and cut the tube, the resistive wire is energized causing the resistive wire to heat rapidly. As the resistive wire heats, it expands. The pivoting arms, which are biased outwardly, take up the slack in the resistive wire thereby maintaining its shape. The resistive wire is then brought into contact with the tube to form a seal across the tube and at the same time cut through the tube along the seal.

Although the above-described prior art methods allow seals to be formed across a fluid filled tube, these methods are only suitable when the seals to be formed across the tube are orthogonal to the longitudinal axis of the tube. In the Schulte method, the sealing and cutting steps are performed at two different stations. However, in situations where seals to be formed across the tube are not orthogonal to the longitudinal axis of the tube, it is important to seal and cut the tube at one station. This is due to the fact that the hydraulic forces acting on the seal by the fluid in the tube above the seal are unevenly distributed along the seal. If the tube is released after the seal is formed, the uneven hydraulic forces tend to move the tube off of its original plane making it difficult to regain control of the tube and subsequently form a cut across the tube along the seal.

Although the resistive wire method allows the tube to be sealed and cut simultaneously, it is also only suitable when orthogonal seals are to be formed across thin film packaging material. This is due to the fact that it is difficult to maintain the shape of the resistive wire and control the pressure required for the resistive wire to seal and cut thicker or laminated packaging material.

An alternative apparatus to form fluid filled containers is disclosed in International Application No. PCT/CA96/00783 published on June 5, 1997 under publication No. WO 97/19852 for an invention entitled "Container With Dispensing Spout And Method For Making Same" and assigned to the assignee of the present invention. Each fluid filled container formed by the apparatus includes a body having an internal reservoir and a narrow, integral dispensing spout extending centrally from the body. The apparatus includes a filling tube extending into a tube of packaging material to deliver fluid into the tube of packaging material. A heat sealing mechanism having upstream and downstream heat sealing bars forms spaced, curvilinear heat seals across the tube of packaging material defining opposed sides of a container. A fluid displacement mechanism in the form of a cylindrical post is associated with each heat sealing bar.

In operation, a heat seal is initially formed at the bottom of the tube of packaging material allowing fluid to be delivered into the tube of packaging material via the filling tube. The fluid level in the tube of packaging material is maintained above the heat sealing bars so that when the curvilinear seals are formed across the tube of packaging material, the resulting containers are filled with fluid and void of air and/or other gasses. Once fluid has been delivered to the tube of packaging material, the fluid displacement mechanism associated with the downstream heat sealing bar is brought into contact with the tube of packaging material to displace fluid upwardly. The downstream heat sealing bar is then brought into contact with the tube of packaging material to form a heat seal thereacross through the fluid in the tube of packaging material. The heat seal is then cut to separate the container from the tube of packaging material.

Thereafter, the fluid displacement mechanism associated with the upstream heat sealing bar is brought into contact with the tube of packaging material to displace fluid upwardly. The upstream heat sealing bar is then brought into contact with the tube of packaging material to form a heat seal thereacross and the heat seal is cut to separate the container from the tube of packaging material. Once this has been done, the tube of packaging material is indexed and the process is performed again to form successive, alternately oriented, interlocked, fluid filled containers. The fluid displacement mechanisms displace sufficient fluid prior to forming the heat seals so that the containers can be made self-supporting and so that the volume of fluid in each container is generally less than or equal to the volume of the reservoir. In this manner, the spouts can be devoid of fluid allowing the spouts to be folded over and releasably attached to the bodies.

Although this container forming apparatus overcomes problems associated with conventional container forming apparatuses by forming fluid filled containers devoid of air and/or other gasses, which extends product life, improvements are continually being sought.

It is therefore an object of the present invention to provide a novel heat sealing and cutting mechanism and container forming apparatus incorporating the same.

### Summary Of The Invention

According to one aspect of the present invention there is provided a heat sealing and cutting mechanism to form a heat seal and a cut across a tube of flexible packaging material, said heat sealing and cutting mechanism comprising:
a carrier to contact said tube;
heat sealing means on said carrier to form a heat seal across said tube when said carrier is in contact with said tube; and
a first resistive wire on said carrier energizeable to cut said tube when said carrier is in contact with said tube.

In one embodiment, the heat sealing means is in the form of at least one second resistive wire band on the carrier spaced from the first resistive wire. The at least one second resistive wire band is energizeable to form a heat seal across the tube. Preferably, a pair of spaced, second resistive wire bands are provided on the carrier with the first resistive wire being positioned between the second resistive wire bands. Preferably, the first resistive wire is in a form of a ribbon turned on its side and is accommodated by a generally central groove formed in the carrier.

In another embodiment, the carrier is in the form of a constant heat sealing bar thereby to constitute the heat sealing means.

According to another aspect of the present invention there is provided a heat sealing and cutting station for a container forming apparatus to form heat seals and cuts across a fluid filled tube of flexible packaging material at longitudinally spaced locations, said heat sealing and cutting station comprising:
a heat sealing and cutting mechanism including a carrier to contact said tube; heat sealing means on said carrier to form a heat seal across said tube when said carrier is in contact with said tube; and a first resistive wire on said carrier energizeable to cut said tube when said carrier is in contact with said tube and after said heat seal has been formed;
a support on which said carrier is mounted on one side of said tube, said support being movable between a retracted position where said carrier is spaced from said tube and an extended position where said carrier is in contact with said tube;
a backing plate on an opposite side of said tube, said backing plate being aligned with said carrier and being movable between a retracted position spaced from said tube and an extended position in contact with said tube;
a drive operable on said support and said backing plate to move said carrier and backing plate between the retracted positions where said tube is free and said extended positions where said tube is trapped between said carrier and backing plate; and
power supply means to energize said heat sealing means and first resistive wire.

According to yet another aspect of the present invention there is provided a heat sealing and cutting station for a container forming apparatus to form heat seals and cuts across a tube of flexible packaging material at longitudinally spaced locations, said heat sealing and cutting station comprising:
at least one set of jaws moveable between an open position where said tube is free and a closed position where said tube is trapped between said jaws;
a heat sealing mechanism carried by at least one of said jaws to form a pair of closely spaced heat seals across the tube when said jaws are in said closed position;
a cutting mechanism carried by one of said jaws to cut the tube between the closely spaced heat seals when the jaws are in the closed position to separate a container from the end of the tube; and
power supply means to energize said heat sealing mechanism.

According to still yet another aspect of the present invention there is provided a heat sealing and cutting station for a container forming apparatus to form heat seals and cuts across a tube of flexible packaging material at longitudinally spaced locations, said heat sealing and cutting station comprising:
at least one set of jaws moveable between a fully open position where said tube is free and a closed position where said tube is trapped between said jaws;
a heat sealing mechanism carried by said jaws to form a heat seal across the tube when said jaws are in said closed position;
a cutting mechanism carried by said jaws to cut the tube along the heat seal when the jaws are in the closed position to separate a container from the end of the tube; and
a container holding mechanism carried by the jaws, said container holding mechanism holding said container when said jaws begin moving from the closed position towards the fully open position in a manner to allow the container to rotate and take a desired orientation before said container is released.

The present invention provides advantages in that the tube can be sealed and cut cleanly while supporting the tube, thereby avoiding the formation of "angel hair". Also, since the heat sealing and cutting mechanisms are disposed on a set of jaws, the cycle rate of the form, fill and seal machine can be increased as compared to prior art machines.

### Brief Description Of The Drawings

An embodiment of the present invention will now be described more fully with reference to the accompanying drawings in which:
Figure 1 is a schematic front elevational view of a container forming and delivery system including a container forming apparatus in accordance with the present invention;
Figure 2 is a perspective view of a container formed by the container forming apparatus of Figure 1;
Figure 3 is an enlarged front elevational view of a tube spreading and filling station forming part of the container forming apparatus of Figure 1;
Figure 4 is simplified perspective view of a container forming station forming part of the container forming apparatus of Figure 1;
Figure 5 is a side elevational view of upper and lower backing plates forming part of the container forming station of Figure 4 taken in the direction of arrow 5;
Figure 6 is a side elevational view of upper and lower heat sealing and cutting mechanisms forming part of the container forming station of Figure 4 taken in the direction of arrow 6;
Figure 7 is apart plan sectional view of the container forming station of Figure 4 in an indexing condition and taken in the direction of line 7-7 thus, showing the lower heat sealing and cutting mechanism and lower backing plate in an open condition;
Figure 8 is a front elevational view of Figure 7 showing the upper and lower heat sealing and cutting mechanisms and upper and lower backing plates in the indexing condition with a fluid filled tube of packaging material extending therebetween;
Figure 9a is a side elevational view of the lower heat sealing and cutting mechanism of Figure 6 with the support omitted;
Figure 9b is an end view of the upper heat sealing and cutting mechanism of Figure 9a;
Figure 9c is a cross-sectional view of Figure 9a taken along the line 9c-9c;
Figure 9d is a partial perspective view of the upper heat sealing and cutting mechanism of Figure 9a;
Figure 10 is a part plan sectional view similar to Figure 7 with the lower heat sealing and cutting mechanism and the lower backing plate in a clamped condition trapping the tube of packaging material therebetween;
Figure 11 is a front elevational view of Figure 10 partially broken away;
Figure 12 is an enlarged region of Figure 11;
Figure 13 is a side elevational view of the tube of packaging material after having been sealed by the container forming station of Figure 4;
Figure 14a is a front elevational view of a diverter forming part of the container forming and delivery system of Figure 1;
Figure 14b is a side elevational view of the diverter of Figure 14a;
Figure 14c is a side elevational view of the diverter of Figure 14a receiving fluid filled containers;
Figure 15 is a side elevational view of a heat sealing station forming part of the container forming and delivery system of Figure 1;

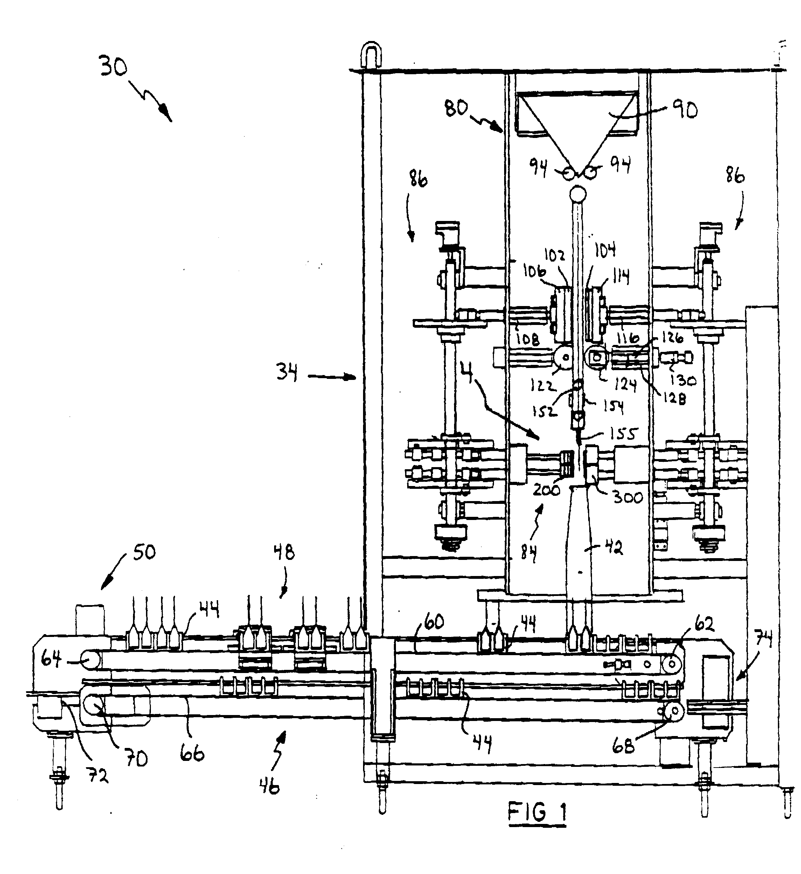

Figure 1 6a is a side elevational view of an alternative embodiment of a heat sealing and cutting mechanism for the container forming apparatus of Figure 1;

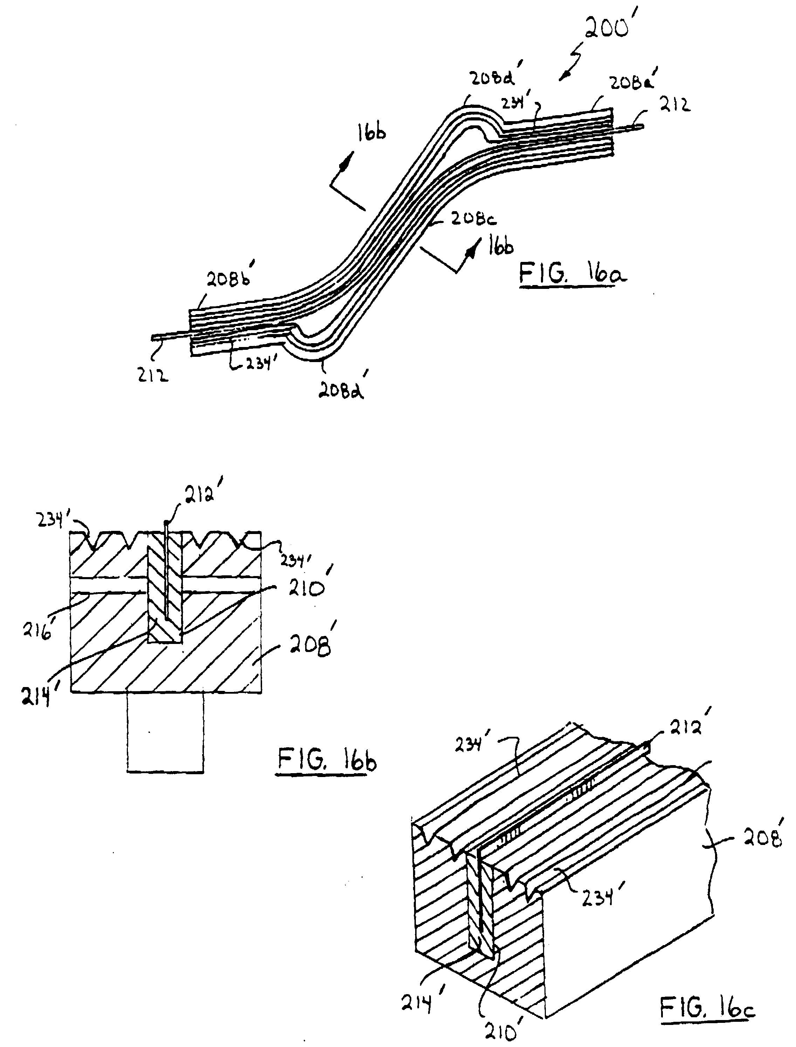

Figure 16b is a cross-sectional view of Figure 16a taken along the line 16c-16c;
Figure 16c is a partial perspective view of the heat sealing and cutting mechanism of Figure 16a;

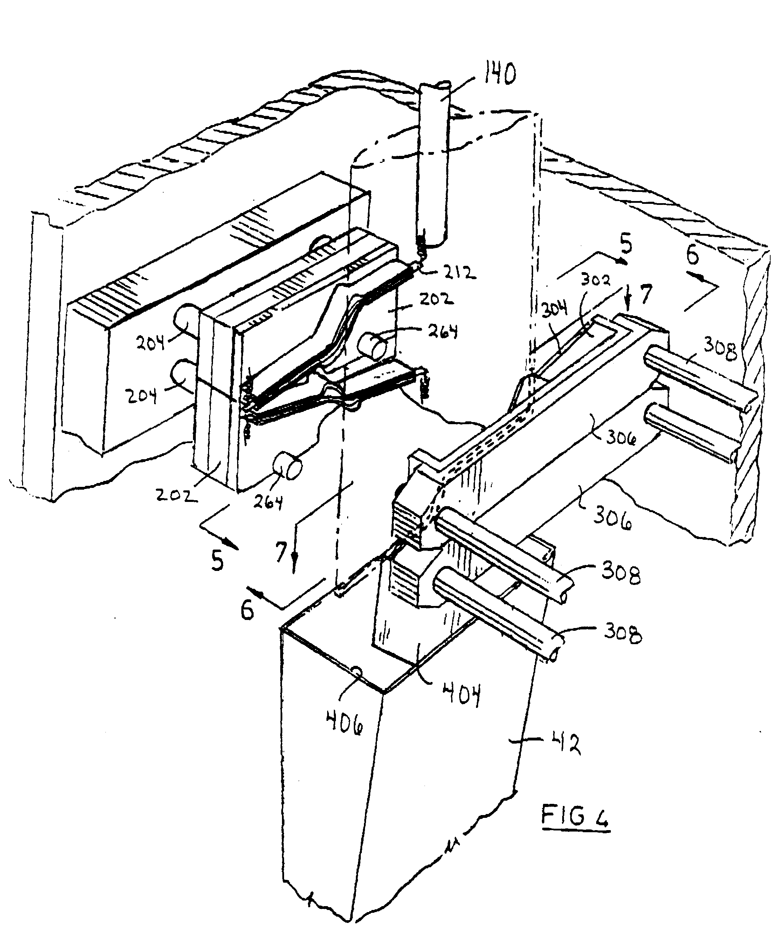

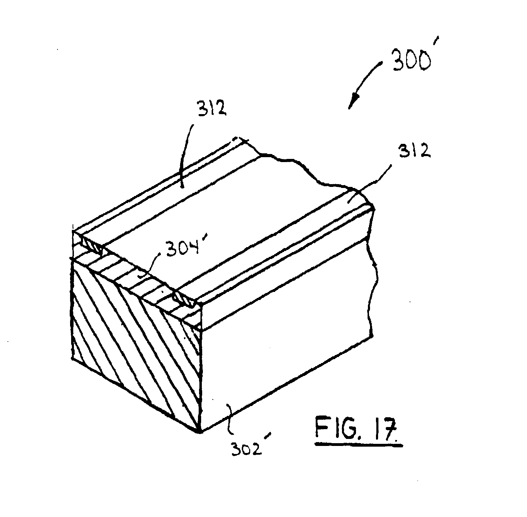

Figure 17 is a partial perspective view of an alternative embodiment of a backing plate for the container forming station of Figure 4;

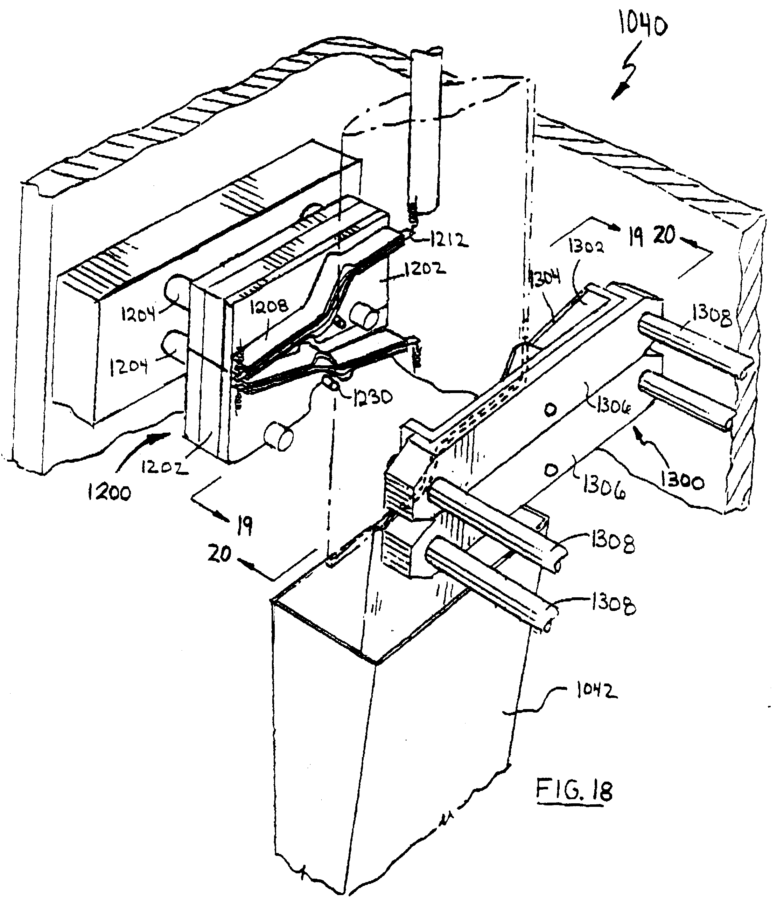

Figure 18 is a perspective view of an alternative embodiment of a container forming station for the container forming apparatus of Figure 1;

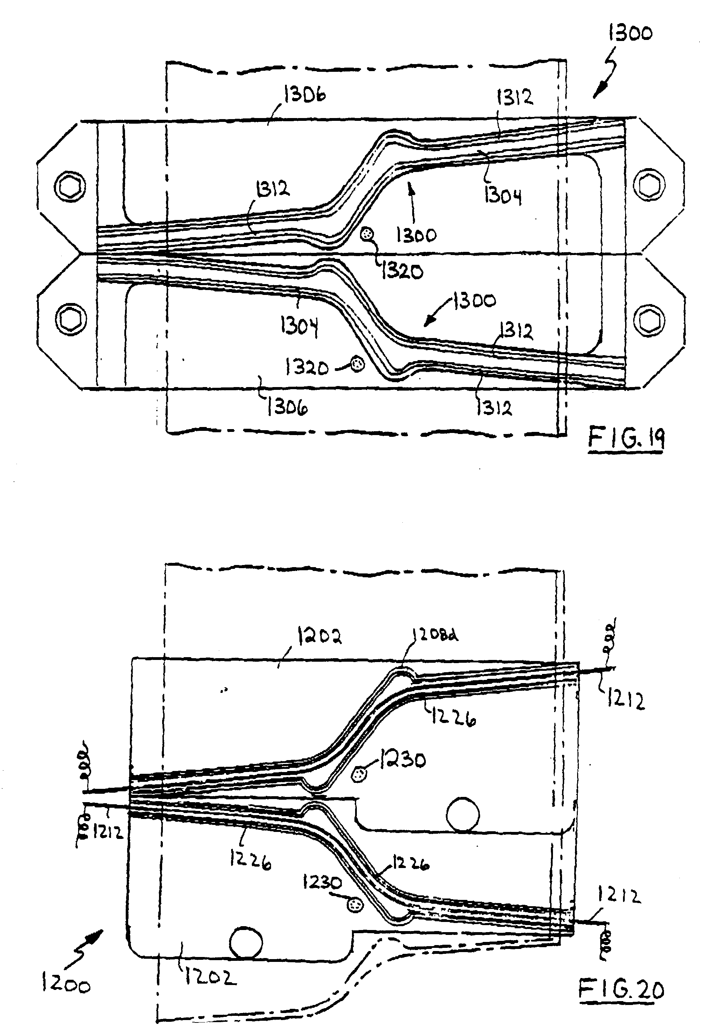

Figure 19 is a side elevational view of upper and lower sealing mechanisms forming part of the container forming station of Figure 18;

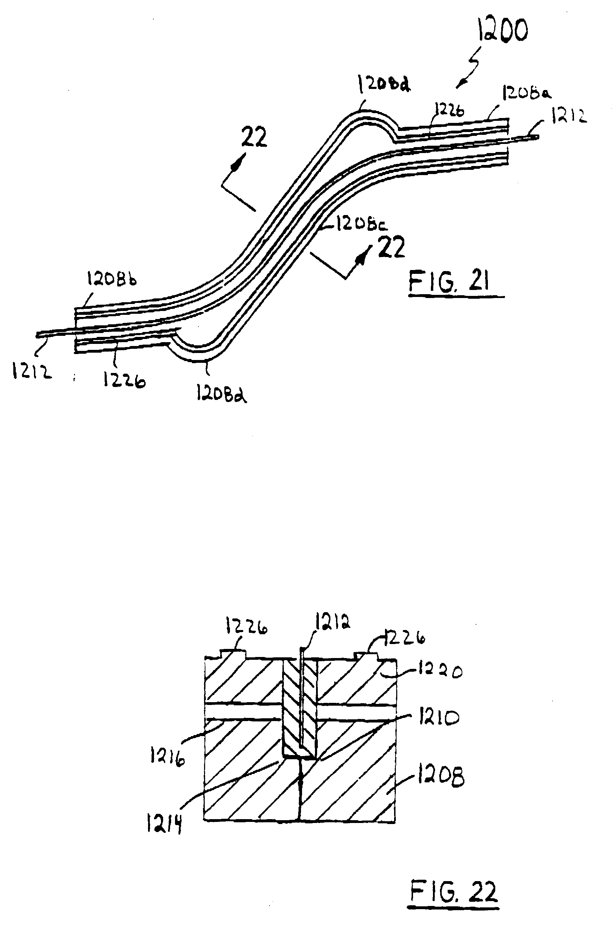

Figure 20 is a side elevational view of upper and lower cutting mechanisms forming part of the container forming station of Figure 18;
Figure 21 is a side elevational view of the upper cutting mechanism of Figure 20 with the support omitted;
Figure 22 is a cross-sectional view of Figure 21 taken along line 22-22;

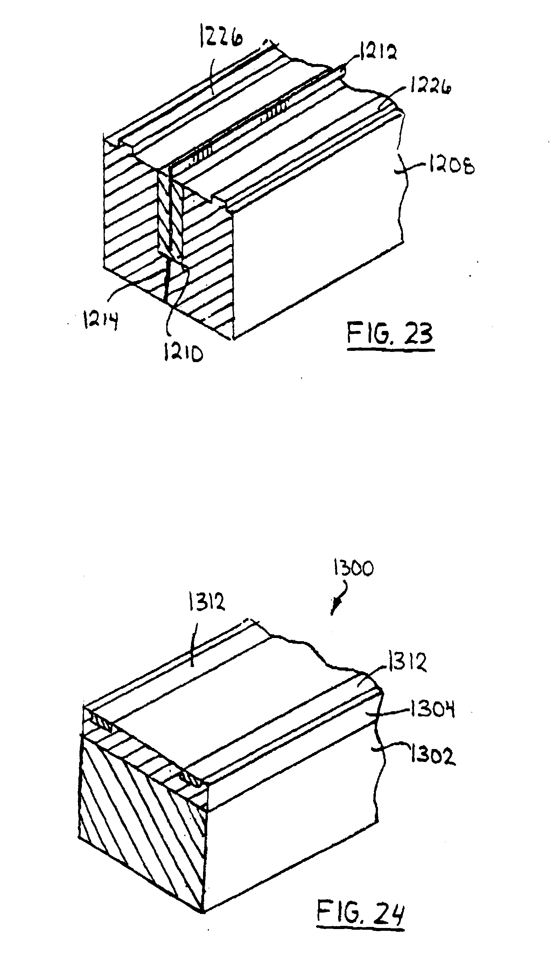

Figure 23 is a cross-sectional view of Figure 21 in perspective;
Figure 24 is a cross-sectional view of Figure 19 in perspective; and

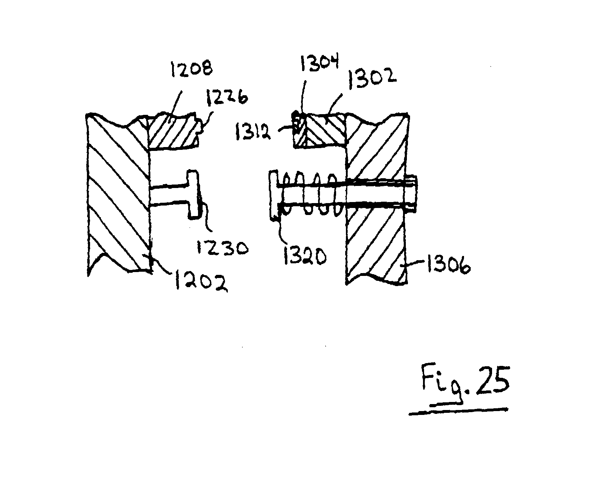

Figure 25 is a cross-sectional view of a portion of the container forming station of Figure 18.

### Detailed Description Of The Preferred Embodiment

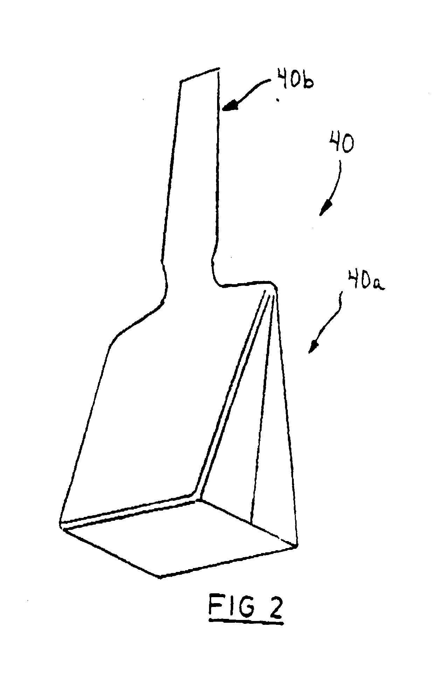

Referring now to Figures 1 and 2, a container forming and delivery system is shown and is generally indicated to by reference numeral 30. As can be seen, system 30 includes a container forming apparatus 32 mounted on a frame assembly 34 and receiving a web of flexible packaging material unwound from a roll (not shown). In the present embodiment, the packaging material is formed of laminated and/or co-extruded multi-layer plastic films. The roll of packaging material is supported on a motor driven shaft (not shown) which when rotated delivers packaging material to the container forming apparatus 32. Container forming apparatus 32 is of the form, fill and seal type and is operable to form individual fluid filled containers 40 from the web of packaging material. A diverter 42 is positioned below the container forming apparatus 32 and delivers the containers 40 to carriers 44 disposed on a conveyor system 46. The conveyor system 46 transports laden carriers 44 to a heat sealing station 48 where the containers 40 are made self-supporting. From station 48, the conveyor system 46 transports the containers 40 to an unloading station 50 where the containers are removed from the carriers 44. The conveyor system 46 then returns the empty carriers 44 to the diverter 42. Further details of the system 30 will now be described.

The conveyor system 46 includes an endless delivery belt 60 wound around head and tail pulleys 62 and 64 respectively. The delivery belt 60 is disposed below and extends from the diverter 42 to the unloading station 50. An endless return belt 66 is also wound around head and tail pulleys 68 and 70 respectively and is positioned beneath the delivery bolt 60. Elevators 72 and 74 are positioned at each end of the conveyor system 46. Elevator 72 transports carriers 44 from the delivery belt 60 at the unloading station 50 to the return belt 66 while elevator 74 transports carriers on the return belt 66 to the delivery belt 60 adjacent the diverter 42.

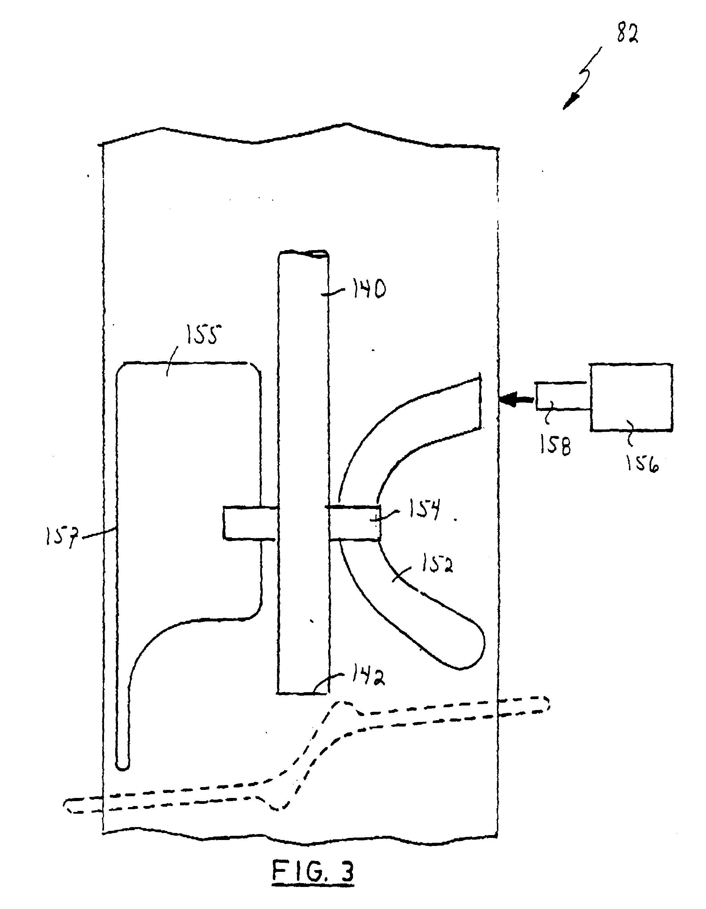

The container forming apparatus 32 includes a tube forming station 80 receiving the web of packaging material unwound from the roll. The tube forming station 80 folds and seals the web to form an open tube. A tube spreading and filling station 82 (see Figure 3) is positioned adjacent the tube forming station 80 and delivers fluid to the tube of packaging material as well as spreads the tube of packaging material prior to sealing. A container forming station 84 is positioned below the tube spreading and filling station 82. The container forming station 84 forms spaced seals across the tube of packaging material to form individual, fluid filled containers 40 and separates the individual containers from the tube. A drive mechanism 86 synchronizes the operation of the tube forming station 80, the tube spreading and filling station 82 and the container forming station 84.

The tube forming station 80 receives the web of packaging material unwound from the roll and includes a folding plate 90 over which the web of packaging material is drawn to fold the web of packaging material over itself. A pair of guide rollers 94 are positioned adjacent the bottom of the folding plate 90 and contact opposite sides of the folded web. The rollers 94 pull the free edges of the web of packaging material together to inhibit the web from traveling. The folded web of packaging material is then fed to a heat sealing mechanism 100 designed to heat seal the free edges of the folded web of packaging material thereby to form a tube.

The heat sealing mechanism 100 includes a vertical, constant heat sealing bar 102 on one side of the web and a corresponding backing plate 104 on the other side of the web. The heat sealing bar 102 and backing plate 104 are aligned with the free edges of the web of packaging material. The heat sealing bar 102 is mounted on a support 106 secured to a cam driven shaft 108 forming part of drive mechanism 86. The backing plate 104 is also mounted on a support 114 secured to a cam driven shaft 116 forming part of drive mechanism 86. The drive mechanism 86 is actuable to reciprocate the heat sealing bar 102 and backing plate 104 between retracted inoperative positions where they are spaced apart and extended operative positions where they are in contact with the overlying free edges of the folded web of packaging material trapped therebetween.

Below the heat sealing mechanism 100 is a pair of driven, rubber pull rollers 122 and 124 respectively contacting opposite sides of the tube of packaging material. The pull roller 122 is mounted on the frame assembly 34 and is in a fixed position. The pull roller 124 is secured to a piston 126 extending from a cylinder 128 of a pneumatic drive 130 and is biased towards pull roller 122 so that the tube of packaging material is grabbed by the pull rollers allowing it to be advanced.

The tube filling and spreading station 82 (best seen in Figure 3) includes a filling tube 140 having an inlet (not shown) receiving fluid to be packaged and an outlet 142 extending into the tube of packaging material to deliver fluid into the tube. A tube spreading device 150 is attached to the filling tube 140 and includes a semi-toroidal member 152 mounted to the filling tube 140 by way of a swivel joint 154 positioned adjacent the mid-point of the member 152. Thus, the swivel joint 154 allows the member 152 to swing in a plane generally parallel to the longitudinal axis of the tube of packaging material between an inoperative retracted condition and an operative extended condition. The member 152 is balanced so that its upstream and downstream ends 152a and 152b respectively remain generally equally spaced from the interior of the tube of packaging material in the inoperative condition. A stationary guide 155 is also mounted on the filling tube 140 diametrically opposite the member 152. The guide 155 has an outer guide surface 157 extending downwardly to the container forming station 84.

Positioned exterior of the tube of packaging material adjacent the upstream end of the member 152 is a pneumatic cylinder 156. The cylinder 156 includes a piston 158 which can be extended to contact the tube of packaging material and the upstream end 152a of the member 152 causing the member to pivot about the swivel joint 154. When the member 152 is pivoted in this manner, its downstream end 152b contacts the tube of packaging material. When the tube of packaging material is contacted by the member 152, the tube of packaging material is pulled against the guide surface 157 and is spread in a transverse direction making the tube of packaging material more elliptical when viewed in top plan. The member 152 and guide 155 are arranged so that the major axis of the spread tube of packaging material extends in the same direction as the longitudinal axes of the containers 40 being formed. This helps to reduce the occurrence of creases in the seals formed across the tube of packaging material by the container forming station 84. When the member 152 is in the inoperative condition, the tube spreading device 150 allows the tube of packaging material to be indexed by the pull rollers 122 and 124 while avoiding "hang ups" from occurring.

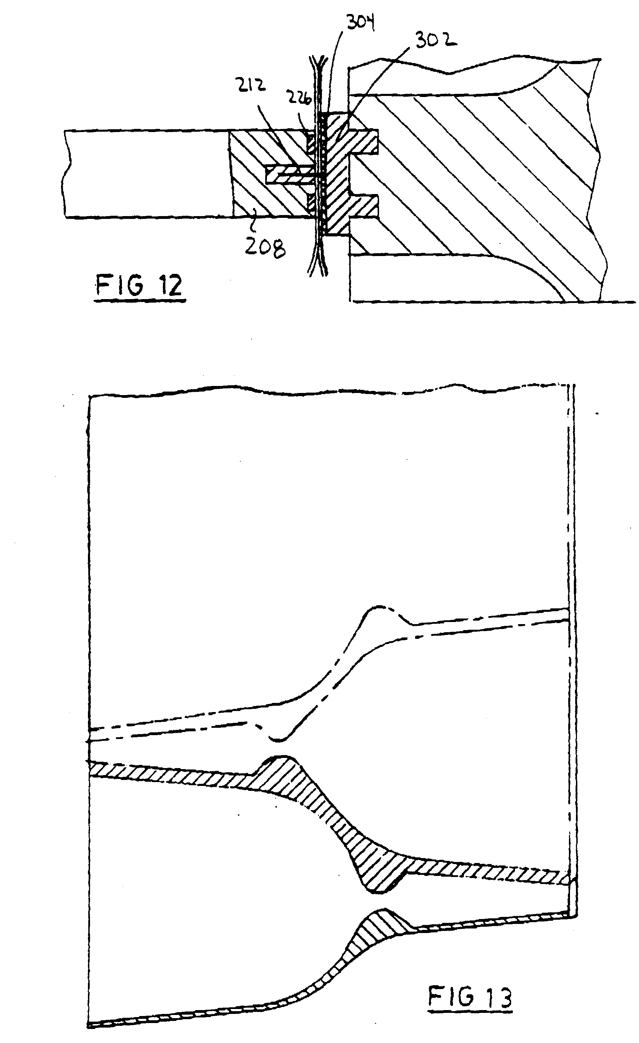

The container forming station 84 forms heat seals across the tube of packaging material at longitudinally spaced locations defining opposed sides of containers and cuts the tube to separate individual containers 40 from the tube. The heat seals are configured so that successive containers 40 formed from the tube of packaging material are alternately oriented and interlocked to reduce packaging material waste (see Figure 13). Each container 40 (best seen in Figure 2) includes a body 40a having an internal reservoir and an integral, narrow dispensing spout 40b extending generally centrally from the body. The spout 40b tapers towards its distal end. Opposed projections (not shown) are formed on the internal wall of the spout 40b adjacent the juncture between the reservoir and the spout. The projections and the dimensions of the spout 40b give an individual control over the velocity of outflowing fluid. Further details of the container can be found in Applicant's PCT application No. PCT/CA96/00783 filed on November 28, 1996.

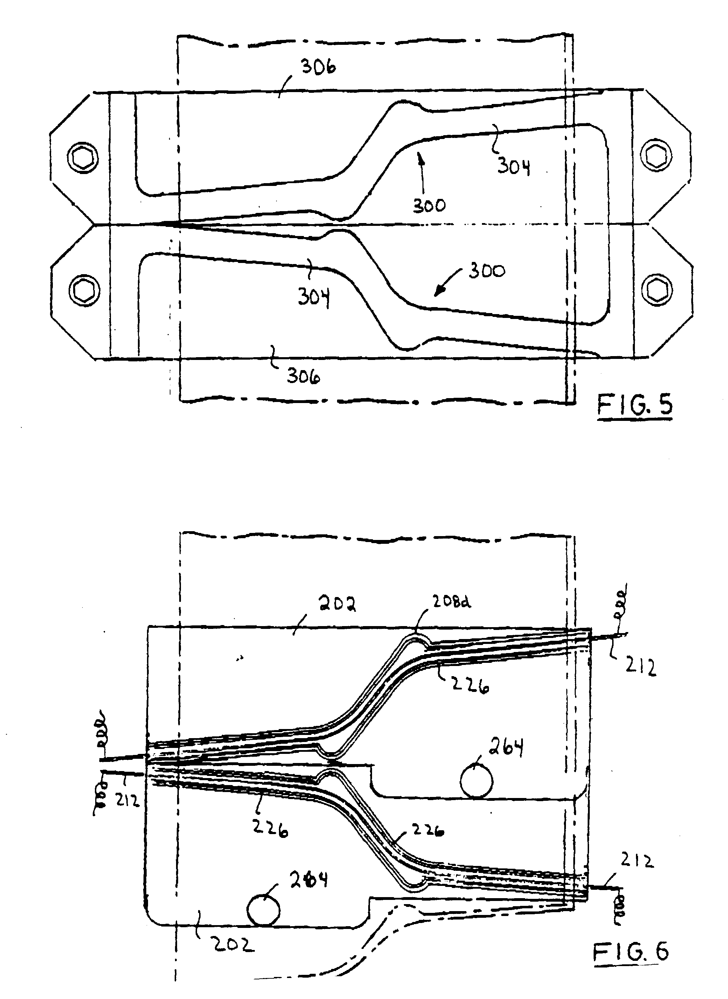

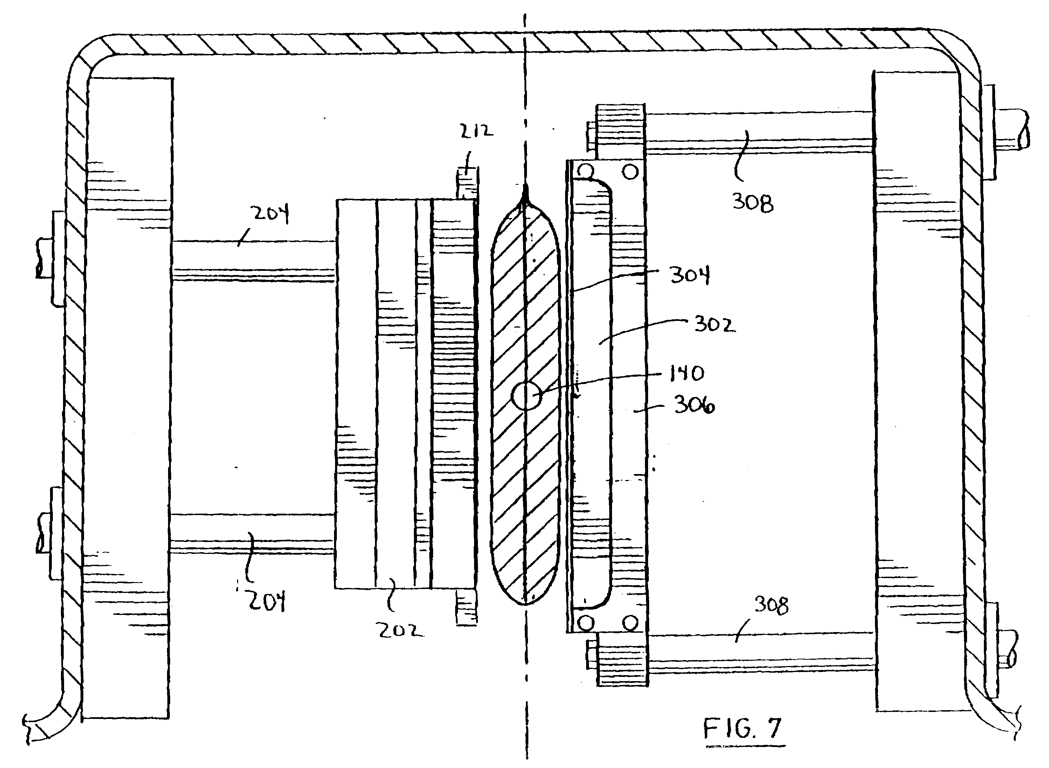

Referring now to Figures 4 to 7, the container forming station 84 is better illustrated. As can be seen, the container forming station includes upper and lower heat sealing and cutting mechanisms 200 positioned on one side of the tube of packaging material. The heat sealing and cutting mechanisms 200 are moveable between retracted and extended positions. Each heat sealing and cutting mechanism 200 is mounted on a support 202 secured to cam driven shafts 204 forming part of the drive mechanism 86.

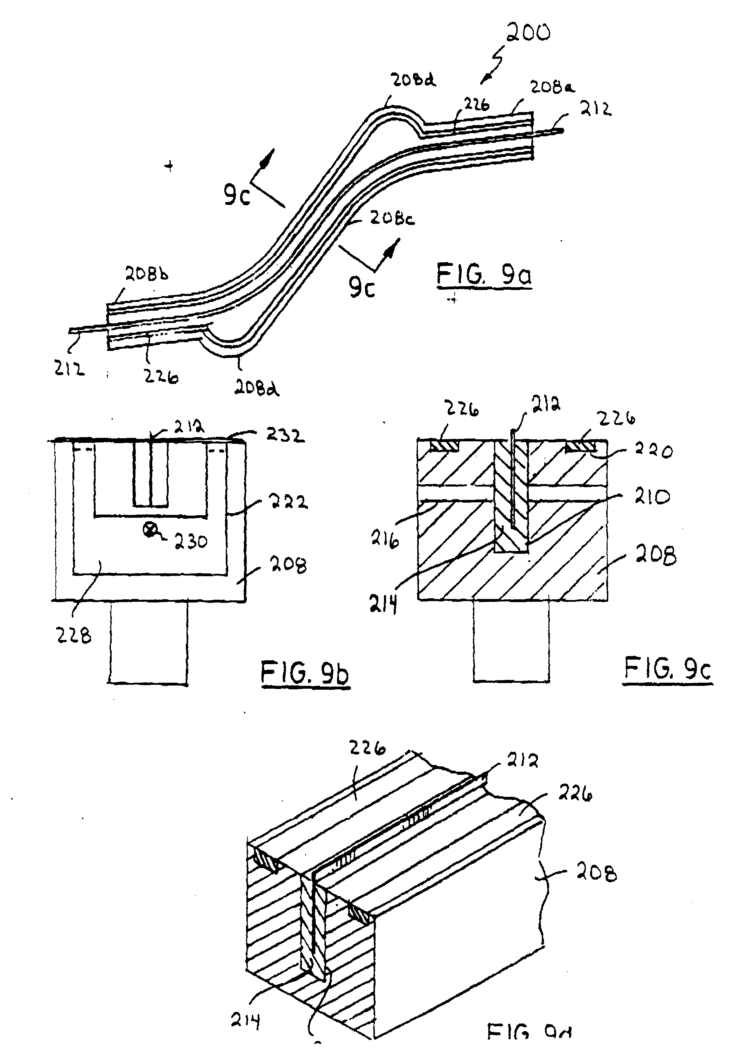

One of the heat sealing and cutting mechanisms is better illustrated in Figures 9a to 9d. As can be seen, the heat sealing and cutting mechanism 200 includes a curvilinear carrier 208 formed of hard anodized aluminum to render the carrier non-electrically conductive. The carrier 208 is generally in the shape of a "lazy-S" having upper and lower arms 208a and 208b respectively joined by a bridge 200c. Bulges 200d are provided at the turns and define the opposed projections within the spouts 40b of the containers 40. A central longitudinal groove 210 is formed in the front face of the carrier 208 and extends along its length. Positioned in the groove 210 is an electrically conductive resistive ribbon 212 such as that manufactured by Toss Machine Components of Nazareth Pennsylvania. The resistive ribbon 212 is turned on its side with its leading edge slightly extending beyond the front face of the carrier 208. Insulating material 214 surrounds the ribbon 212 within the groove 210 to isolate electrically the carrier and the ribbon. A fastener (not shown) formed of electrically non-conductive material is accommodated by a passage 216 extending through the width of the carrier 208 adjacent the midpoint of the carrier 208 to secure the ribbon 212 to the carrier. The free ends of the ribbon 212 extend beyond the ends of the carrier 208 and are connected to an electrical power supply (not shown) to allow the central ribbon to be energized as will be described.

Laterally spaced grooves 220 are also formed in the front face of the carrier 208 on opposite sides of the resistive ribbon. The grooves run the length of the carrier and follow its opposed side edges. Rectangular recesses 222 are also provided in the ends of the carrier 208 and communicate with the grooves 220. Accommodated within the grooves 220 and recesses 222 is an electrically conductive, resistive wire sealing loop 224 defining bands 226. The bands 226 are seated in the grooves 220. The ends 228 of the sealing loop 224 are folded over the ends of the carrier 208 and are seated in the recesses 222. Fasteners 230 pass through the ends 228 of the sealing loop and engage the carrier 208 to secure the sealing loop to the carrier. The ends of the sealing loop 224 are also connected to an electrical power supply (not shown) to allow the sealing loop to be electrically energized as will be described.

Teflon® tape 232 overlies the front face of the carrier 208 to retain the bands 226 of the sealing loop within the grooves 220 and to inhibit sticking of the carrier 208 to the tube of packaging material. The leading edge of the central ribbon 212 passes through the Teflon tape 232. The front face of the carrier 208 slopes away from the central groove 210. The slope is equal to between about 0 and 5 degrees

A generally cylindrical, hydraulic equalization post 264 is also provided on the support 202. The hydraulic equalization post 264 is generally in line with the lower arm of the carrier 208 defining the spout of the container being formed.

On the opposite side of the tube of packaging material in line with the heat sealing and cutting mechanisms are corresponding upper and lower backing plates 300. Each backing plate 300 is aligned with and corresponds in shape to a respective one of the heat sealing and cutting mechanisms 200. Each backing plate 300 includes an anvil 302 mounted on a support 306 and having a rubber strip 304 secured to its outer surface. Each support 306 is secured to cam driven shafts 308 forming part of the drive mechanism 86. The upper and lower heat sealing and cutting mechanisms and the upper and lower backing plates function as jaws, which trap and release the tube of packaging material as will be described.

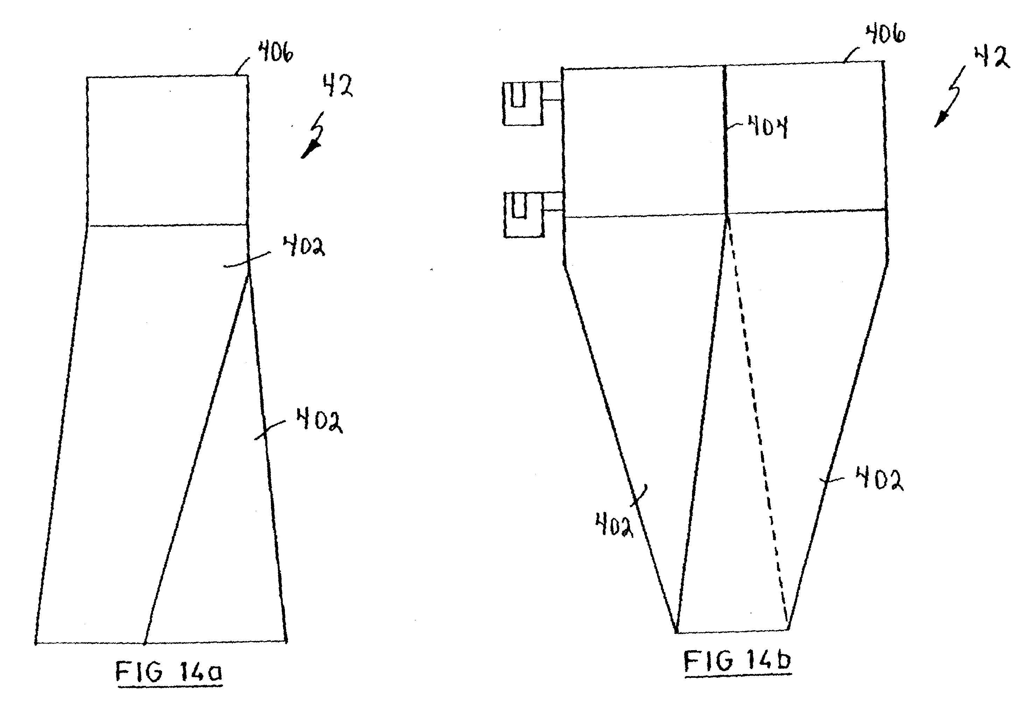

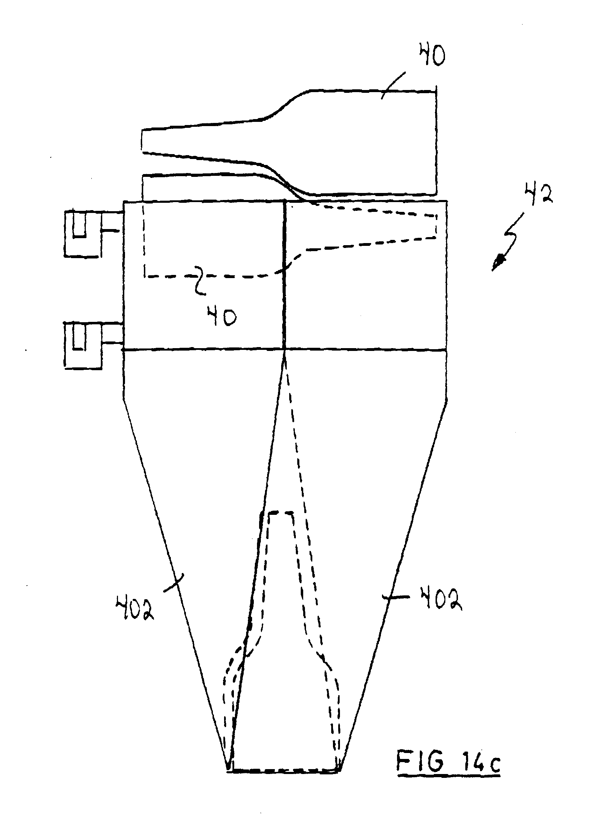

Positioned below the container forming station 84 is the diverter 42 (best seen in Figures 14a to 14c). The diverter includes a pair of side by side chutes 402 separated to a central dividing wall 404. The upper opening 406 of each chute 402 flares outwardly to catch falling containers 40. The chutes 402 are shaped so that successive containers formed by the container forming station 84 are delivered to side by side seats on one of the carriers 44.

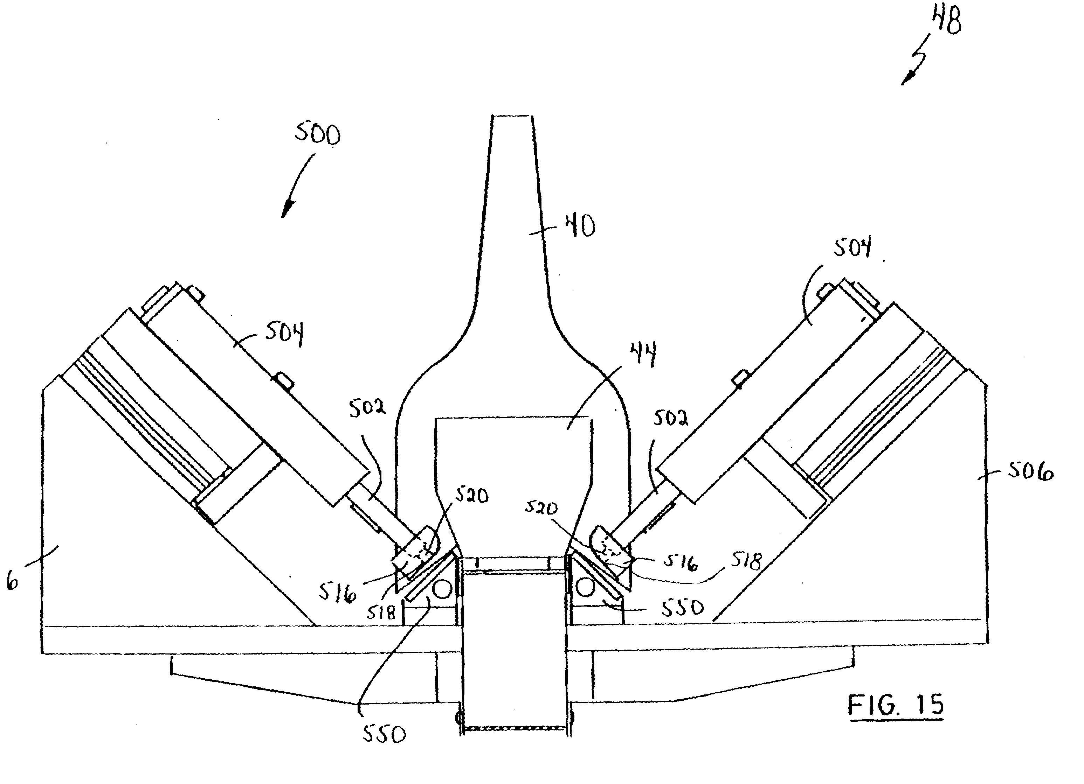

Station 48 includes a pair of heat sealing and cutting machines 500 (best seen in Figures 15a and 15b), each of which is positioned on an opposite side of the delivery belt 60. Each heat sealing and cutting machine 500 includes a heat sealing and cutting assembly 502 secured to a pneumatically controlled air cylinder 504 mounted on an inclined, wedge-shaped support 506.

Each heat sealing and cutting assembly 502 includes a fluid displacement unit 516 having an opening 518 therein. A heat sealing and cutting mechanism 520 including a carrier having an angled front face is moveable through the opening 518. The carrier has a central groove and peripheral grooves formed therein. The central groove accommodates a central resistive cutting ribbon while the peripheral grooves accommodate the bands of a resistive sealing loop.

The operation of the container forming and delivery system 30 will now be described. As the web material is unwound from the roll by rotating the motor driven shaft, the web material is delivered to the folding plate 90. The web is then pulled over the folding plate 90 which folds the web over itself. The folded web is then pulled together by the rollers 94 before being conveyed to the heat sealing station 100. At the heat sealing station, the heating sealing bar 102 and backing plate 104 are brought together by the drive mechanism 86 to sandwich the folded web and form a seal along the free edges of the folded web thereby to form a tube. The heat sealing bar 102 and backing plate 104 are then retracted by the drive mechanism 86 allowing the tube of packaging material to be indexed by the pull rollers 122 and 124.

After the tube of packaging material has been advanced and assuming that a seal has been formed across the bottom of the tube of packaging material, fluid is delivered into the tube via the filling tube 140 to fill partially the tube. The air cylinder 156 of the tube spreading device 150 is then actuated by the drive mechanism 86 to spread the tube so that it takes generally a more elliptical shape. Thereafter, the lower heat sealing and cutting mechanism 200 and lower backing plate 306 are extended by the drive mechanism 86 to contact the fluid filled tube and clamp the fluid filled tube thereby to flatten the tube of packaging material in a narrow region where a seal is to be formed. The hydraulic equalization post 264 on the support 202, which is generally in line with the lower arm ofthe carrier 208 helps to support the tube of packaging material in a direction generally orthogonal to the longitudinal axis of the tube of packaging material. The hydraulic equalization post 264 is dimensioned so that it contacts the fluid filled tube slightly before the fluid filled tube is clamped and displaces fluid in the tube of packaging material upwardly above the heat sealing and cutting mechanism 200 and lower backing plate 306. In this manner, the amount of fluid held in the tube of packaging material between the seal at the bottom of the tube and the lower heat sealing and cutting mechanism 200 and lower backing plate 306 is set to the desired amount. The amount of displaced fluid ensures sufficient room for the corners of the containers to be pinched to make the containers self-supporting.

With the fluid filled tube held between the carrier 208 of the heat sealing and cutting mechanism 200 and the lower backing plate 306, the resistive wire sealing loop 224 is energized by the power supply causing the sealing loop to heat sufficiently so that the bands 226 form closely spaced, curvilinear heat seals across the tube of flexible packaging material. Once the seals have been formed, the sealing loop 224 is de-energized. The carrier 208 however, remains in position to clamp the tube of packaging material allowing the seals to cool and set. Thereafter, the central ribbon 212 is energized by the power supply to heat the central ribbon to a high temperature. The central ribbon, when heated, vaporizes the tube of flexible packaging material between the seals resulting in a clean cut through the tube and avoiding the formation of "angel hair". During heating of the central ribbon 212 to cut the tube of packaging material, the central ribbon expands. Since the ribbon 212 is fastened to the carrier 208 at its mid-point, the opposed free ends of the ribbon are free to move thereby to accommodate the expansion while maintaining the desired shape of the ribbon 212.

Once cut has been made, the drive mechanism 86 retracts the lower heat sealing and cutting mechanism 200 and lower backing plate 306 to release the formed container. The Teflon® tape on the front face of the carrier 208 inhibits the flexible packaging material from adhering to the carrier.

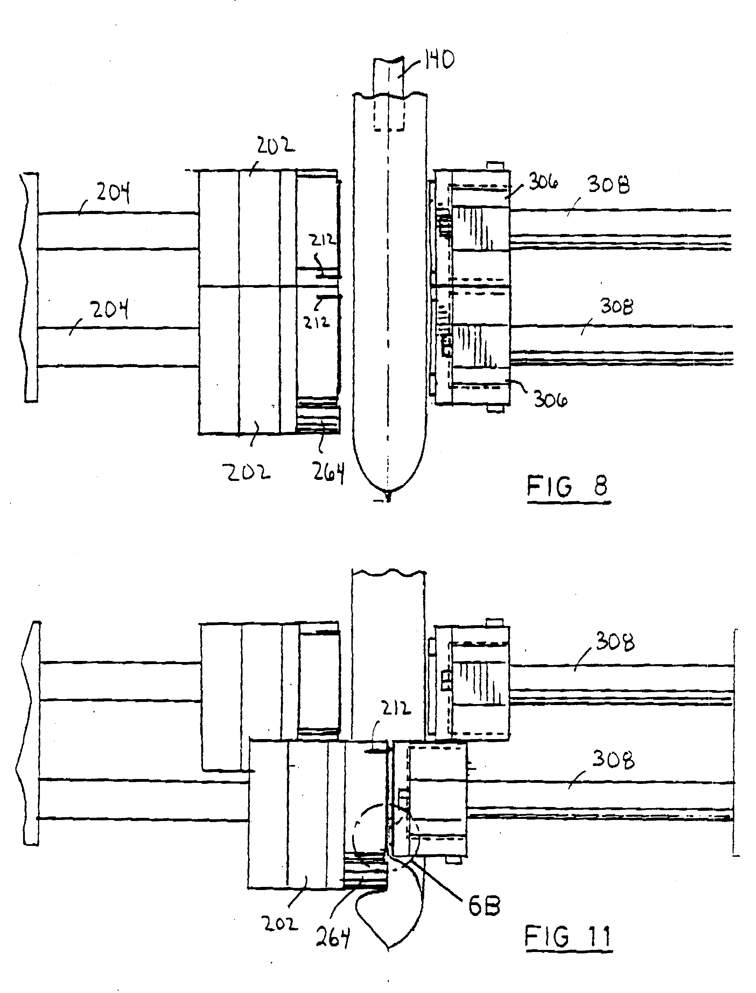

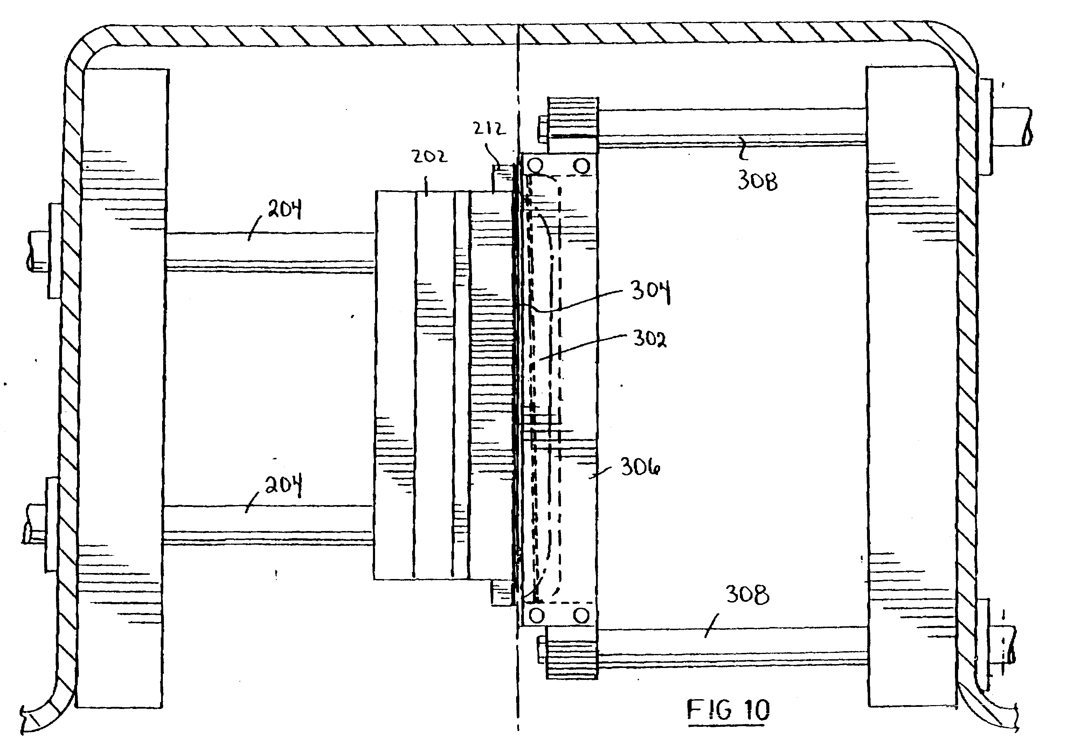

At this stage, the upper heat sealing and cutting mechanism 200 and upper backing plate 306 are extended by the drive mechanism 86 to clamp the tube of packaging material therebetween. The same sequence of steps is then performed so that a second container is formed and separated from the tube of packaging material. Thereafter, the web of packaging material is indexed twice by the pull rollers 122 and 124 allowing the next two containers to be formed and separated from the tube of packaging material in succession by the container forming apparatus. Figures 8 and 10 to 12 illustrate the above-described sequence of events.

As each container is formed and separated from the tube, each container 40 falls toward the diverter 42. Since the reservoirs of each pair of formed containers are positioned on opposite sides of the longitudinal axis of the tube of packaging material, the weight of the fluid in the reservoirs causes the containers to fall to opposite sides of the central longitudinal axis of the tube. Each container is therefore received by a different chute 402 of the diverter 42. As each container enters a chute, its spout contacts the dividing wall 404 causing the container to turn upright. The upright containers are then delivered by the chutes 402 to different seats of the carrier 44 positioned below the diverter 42.

Once the containers are positioned in the seats of the carrier 44, the delivery belt 60 is driven to advance the carrier to the station 48. When the carrier arrives at the station, the pneumatic air cylinders 504 are actuated to bring the assemblies 502 into contact with opposed bottom comers of the body 40a thereby to pinch the corners of the container between the assemblies and wedge-shaped backing plates 550. The displacement units 516 displace fluid from the pinched corners into the reservoir. The heat sealing and cutting mechanisms 520 are then extended through the openings 518 to contact the pinched corners and the loops are energized to form seals. Thereafter, the central ribbon is energized to cut the pinched corners and remove the comers from the containers. Once the corners have been removed, the displacement units and heat sealing and cutting mechanisms are retracted.

Following this, the delivery belt 60 is driven to deliver the self-supporting containers to the unloading station 50 where the containers are removed from the carriers 44. Once emptied, the carriers 44 are carried by the elevator to the return belt allowing the return belt to deliver the carriers to the elevator so that the carriers can be placed back on the delivery belt adjacent the container forming apparatus 32. The above operation can be performed at a high speed allowing fluid filled containers to be formed quickly.

Although during the heat sealing and cutting operation, the sealing loop is described as being energized first to seal the tube, the sealing loop 224 and central ribbon 219 can be energized simultaneously to seal and cut the tube of packaging material virtually at the same time. This operation is convenient when the fluid being introduced into the tube is cold since the cold fluid helps to set the seals. In aseptic packaging where fluids are at higher temperatures, a dwell between the time the seals are formed and the time the tube of packaging material is cut is preferred to allow the seals to set and ensure their integrity. Alternatively, the carriers 208 can be provided with coolant conduits therein to allow coolant to flow through the carriers. In aseptic packaging, as soon as the sealing loop 224 has been deenergized, the coolant flow through the carrier 208 cools the seals allowing the central ribbon 212 to be energized slightly thereafter to cut the tube between the seals and separate the container from the tube.

Referring now the Figure 16a to 16c, another embodiment of a heat sealing and cutting mechanism 200' is shown. In this embodiment, like reference numerals will be used to indicate like components of the first embodiment with a "'" added for clarity. As can be seen, the heat sealing and cutting mechanism 200' includes a curvilinear constant heat sealing bar 208' mounted on a support 202'. The heat sealing bar 208' is heated by a power source (not shown) to a temperature sufficient to form a curvilinear heat seal across the tube when the heat sealing bar and corresponding backing plate clamp the fluid filled tube of packaging material therebetween.

The heat sealing bar 208' is generally in the shape of a "lazy-S" having upper and lower arms 208a' and 208b' respectively joined by a bridge to 200c'. Bulges 200d' are provided at the turns and define the opposed projections within the spouts of the containers. A central longitudinal groove 210' is formed in the front face of the heat scaling bar 208' and extends along its length. Positioned in the groove 210' is an electrically conductive resistive ribbon 212'. The resistive ribbon 212' is turned on its side with its leading edge slightly extending beyond the front face of the heat sealing bar. Insulating material 214' surrounds the ribbon 212' within the groove to isolate electrically the heat sealing bar 208' and the ribbon 212'. A fastener (not shown) formed of electrically non-conductive material is accommodated by a passage 216' extending through the width of the heat sealing bar adjacent the mid-point of the heat sealing bar 208' to secure the ribbon 212' thereto. The free ends of the ribbon extend beyond the ends of the heat sealing bar 208' and are connected to an electrical power supply (not shown) to allow the central ribbon to be energized.

The front face of the heat sealing bar 208' slopes away from the central groove 210'. The slope is equal to between about 0 to 5 degrees. Parallel V-shaped channels 234' are also formed in the front face of the heat sealing bar 208' between the central groove 210' and the peripheral edges of the heat sealing bar and extend the length of the heat sealing bar. The channels 234' are approximately 0.015 inches deep.

When the heat sealing and cutting mechanism 200' is used in the container forming apparatus 30, and it is desired to form a heat seal across the tube of packaging material, the drive mechanism 86 is actuated to extend the heat sealing and cutting mechanism 200' and corresponding backing plate 306 to clamp the fluid filled tube of packaging material therebetween. The heat sealing bar 208' which is energized by the power supply, forms a heat seal across the tube of packaging material. Once the heat seal has been formed, the central ribbon 212' is energized by the power supply to heat the central ribbon to a high temperature. The central ribbon 212' in turn vaporizes the tube of packaging material along the center of the heat seal resulting in a clean cut through the tube avoiding the formation of "angel hair".

Since the central ribbon 212' is carried within the constant heat sealing bar 208', the central ribbon is preheated. This helps to reduce the amount of expansion of the central ribbon when it is energized to cut the tube. Since the central ribbon is fastened to the heat sealing bar at its mid-point leaving its opposed ends free, expansion of the heat sealing ribbon is accommodated while maintaining its desired shape.

Turning now to Figure 17, an alternative embodiment of a backing plate 300' for the container forming station 84 is shown. In this embodiment, like reference numerals will be used to indicate like components of the previous embodiment with a ""' added for clarity. The backing plate 300' is particularly suited to environments where seals are to be formed across a tube of flexible packaging material made of several plies or having a thick wall. In this embodiment, the backing plate 300' includes an anvil 302' having a strip of rubber 304' vulcanized onto its outer surface. Vulcanized onto the top surface ofthe strip ofrubber 304' are two spaced-apart, metallic, resistive, heat sealing bands 312. The bands 312 match the configuration of the bands 226 and are flush with the outer surface of the rubber strip 304'. The heat sealing bands 312 are connected to an electrical power supply (not shown) to allow the bands 312 to be energized.

During operation, when the upper and lower heat sealing and cutting mechanisms and the corresponding upper and lower backing plates are extended to clamp the tube of packaging material, the heat sealing bands 226 and the heat sealing bands 312 are both energized to form heat seals across the tube. By providing heat from the aligned bands 226 and 312 on opposite sides of the tube, the required surface temperature of the bands on both the carrier and the backing plate is reduced thereby reducing the tendency for the packaging material to melt and adhere to the carrier or rubber strip 304'. Also by providing the vulcanized rubber strip 304' between the bands 312 and the anvil 302', the bands are electrically and thermally insulated from the anvil 302'.

Turning now to Figures 18 and 20, an alternative embodiment of a container forming station is shown and is generally identified by reference numeral 1040. As can be seen, the container forming station 1040 includes upper and lower cutting mechanisms 1200 positioned on one side of the tube of packaging material. The cutting mechanisms are moveable between retracted and extended positions. Each cutting mechanism 1200 is mounted on a support 1202 secured to cam driven shafts 1204 forming part of drive mechanism 86.

One of the cutting mechanisms 1200 is better illustrated in Figures 20 to 23. In this embodiment, the carrier 1208 is constituted by a pair of nested parts. A central longitudinal groove 1210 is defined between the parts and accommodates resistive ribbon 1212. The carrier 1208 is formed of hard anodized aluminum to render the carrier non-electrically conductive. The separate nested parts facilitates anodization of the aluminum within the groove 1210.

Laterally spaced tracks 1226 extend from the front face of the carrier 208 on opposite sides of the resistive ribbon 1212. The tracks 1226 run the length of the carrier 1208 and follow its opposed side edges. A post 1230 extends forwardly of the support 1202 adjacent the lower bulge 1208d of the carrier. The forward face of the post is generally in line with the front face of the carrier 1208.

On the opposite side of the tube of packaging material and in line with the cutting mechanisms 1200 are corresponding upper and lower sealing mechanisms 300. Each sealing mechanism 1300 is aligned with and corresponds in shape to a respective one of the cutting mechanisms 1200. Each sealing mechanism 1300 includes an anvil 1302 mounted on a support 1306 and having a rubber strip 1304 vulcanized on its outer surface. Each support 1306 is secured to cam driven shafts 308 forming part of the drive mechanism 86.

Vulcanized on the forward surface of the rubber strip 1304 are two spaced-apart metallic, heat sealing resistive bands 1312. The ends of the bands 1312 are connected to an electrical power supply (not shown) to allow the resistive bands to be energized. The shapes of the resistive bands 1312 match the shapes of the tracks 1226 on the carrier 1208. In this manner, the tracks 1226 on the carrier 1208 provide a solid backing surface for the heat sealing resistive bands 1312 on the rubber strip 1304 when the sealing and cutting mechanisms are brought into contact. A spring loaded finger 1320 extends from the support 1306 beyond the forward surface ofthe rubber strip 1304 and is aligned with the post 1230 extending from the support 1202. The post 1230 and spring loaded finger 1320 hold the tube below the carrier 1208 and anvil 1302 when the cutting mechanism 1200 and sealing mechanism 1300 are extended to trap the tube of packaging material therebetween.

During operation, when it is desired to form heat seals and cuts across the tube of packaging material at longitudinally at spaced locations, the cutting mechanism 1200 is moved from a retracted position to an extended position to contact the tube. The corresponding sealing mechanism 1300 is also moved to the extended position so that the tube is trapped therebetween. At this time, the electrical power supply connected to the heat sealing resistive bands 1312 on the rubber strip 1304 is energized heat the bands and thereby form closely spaced heat seals across the tube. The tracks 1226 extending from the carrier 208 allow sufficient pressure to be applied to the tube of packaging material during heating, resulting in high integrity seals being formed across the tube of packaging material. Once the heat seals have been formed, the centrally disposed resistive wire 1212 on the carrier 1208 is energized to sever the tube between the heat seals created by the resistive bands 1312. At this stage, the cutting mechanism 1200 and sealing mechanism 1300 are retracted allowing the packaging material along the sever line to vaporize.

As the cutting mechanism 1200 and sealing mechanism 1300 are moved apart, the post 1230 and spring loaded finger 1320 remain in contact to hold the container separated from the end of the tube. The positions of the post and spring loaded finger result in the container rotating to an upright position under the influence of gravity while still being held by the post 1230 and spring loaded finger 1320. Further movement of the cutting mechanism and sealing mechanism away from one another finally brings the post 1230 and spring loaded finger 1320 out of contact thereby releasing the container and allowing the container to fall under the influence of gravity. As the container falls, the container is received by a curved chute 1042 positioned below the container forming station 1040. The curved chute delivers the container to an inclined conveyor (not shown), which in turn delivers the container to a carrier. The carrier carries the container to downstream equipment for further processing.

Since each container is held by the container forming station after it has been formed, in a manner to allow the carrier to orient itself, the orientation of containers delivered to downstream equipment can be controlled in a highly predictable fashion. This of course facilitates downstream processing of the containers.

The present invention provides advantages in that non-orthogonal seals can be formed across the tube and then cut cleanly, quickly and in a controllable fashion. Virtually any type of multi-layered or laminated flexible packaging material can be sealed and cut using the present method without requiring large pressures to be applied to the flexible packaging to support the tube during sealing and cutting. Sealing temperatures and pressures can be selected to optimize the formation of seals across selected packaging materials.

Although preferred embodiments of the present invention have been described, those of skill in the art will appreciate that variations and modifications may be made without departing from the spirit and scope thereof as defined by the appended claims.

## Claims

1. A heat sealing and cutting mechanism to form a heat seal and a cut across a tube of flexible packaging material, said heat sealing and cutting mechanism comprising:
a carrier to contact said tube;
heat sealing means on said carrier to form a heat seal across said tube when said carrier is in contact with said tube; and
a first resistive wire on said carrier energizeable to cut said tube when said carrier is in contact with said tube.

2. A heat sealing and cutting mechanism as defined in claim 1 wherein said heat sealing means is in the form of at least one second resistive wire band on said carrier spaced from said first resistive wire, said at least one second resistive wire band being energizeable to form a heat seal across said tube.

3. A heat sealing and cutting mechanism as defined in claim 1 or claim 2 including a pair of spaced, second resistive wire bands each being energizeable to form heat seals across said tube, said first resistive wire being positioned between said second resistive wire bands.

4. A heat sealing and cutting mechanism as defined in claim 1 wherein said carrier is in the form of a constant heat sealing bar thereby to constitute said heat sealing means.

5. A heat sealing and cutting mechanism as defined in any of the preceding claims wherein said first resistive wire is in the form of a ribbon turned on its side and accommodated by a generally central groove formed in said carrier, a leading edge of said ribbon extending beyond the leading front face of said carrier.

6. A heat sealing and cutting station for a container forming apparatus to form heat seals and cuts across a fluid filled tube of flexible packaging material at longitudinally spaced locations, said heat sealing and cutting station comprising:
a heat sealing and cutting mechanism including a carrier to contact said tube; heat sealing means on said carrier to form a heat seal across said tube when said carrier is in contact with said tube; and a first resistive wire on said carrier energizeable to cut said tube when said carrier is in contact with said tube and after said heat seal has been formed;
a support on which said carrier is mounted on one side of said tube, said support being movable between a retracted position where said carrier is spaced from said tube and an extended position where said carrier is in contact with said tube;
a backing plate on an opposite side of said tube, said backing plate being aligned with said carrier and being movable between a retracted position spaced from said tube and an extended position in contact with said tube;
a drive operable on said support and said backing plate to move said carrier and backing plate between the retracted positions where said tube is free and said extended positions where said tube is trapped between said carrier and backing plate; and
power supply means to energize said heat sealing means and first resistive Wire,

7. A heat sealing and cutting station as defined in claim 6 wherein said heat sealing means is in the form of at least one second resistive wire band on said carrier spaced from said first resistive wire, said at least one second resistive wire band being energizeable to form a heat seal across said tube.

8. A heat sealing and cutting station as defined in claim 6 or claim 7 including a pair of spaced, second resistive wire bands each being energizeable to form heat seals across said tube, said first resistive wire being positioned between said second resistive wire bands.

9. A heat sealing and cutting station as defined in claim 6 wherein said carrier is in the form of a constant heat sealing bar thereby to constitute said heat sealing means.

10. A heat sealing and cutting station as defined in any one of claims 6 to 9 wherein said first resistive wire is in the form of a ribbon turned on its side and accommodated by a generally central groove formed in said carrier, a leading edge of said ribbon extending beyond the leading front face of said carrier.

11. A heat sealing and cutting station for a container forming apparatus to form heat seals and cuts across a tube of flexible packaging material at longitudinally spaced locations, said heat sealing and cutting station comprising;
at least one set of jaws moveable between an open position where said tube is free and a closed position where said tube is trapped between said jaws;
a heat sealing mechanism carried by at least one of said jaws to form a pair of closely spaced heat seals across the tube when said jaws are in said closed position;
a cutting mechanism carried by one of said jaws to cut the tube between the closely spaced heat seals when the jaws are in the closed position to separate a container from the end of the tube; and
power supply means to energize said heat sealing mechanism.

12. A heat scaling and cutting station as defined in claim 11 wherein said heat sealing mechanism and said cutting mechanism are carried by the same jaw.

13. A heat sealing and cutting station as defined in claim 11 wherein said heat sealing mechanism and said cutting mechanism are carried by different jaws.

14. A heat sealing and cutting station as defined in claim 11 wherein both jaws carry a heat sealing mechanism.

15. A heat sealing and cutting station as defined in any one of claims 11 to 14 wherein said heat sealing mechanism includes a pair of closely spaced, resistive, heat sealing bands carried by said at least one jaw.

16. A heat sealing and cutting station as defined in any one of claims 11 to 15 wherein said cutting mechanism is a resistive wire carried by said one jaw, said resisitive wire being energizeable by said power supply means to cut said tube between said closely spaced, heat seals.

17. A heat sealing and cutting station for a container forming apparatus to form heat seals and cuts across a tube of flexible packaging material at longitudinally spaced locations, said heat sealing and cutting station comprising:
at least one set of jaws moveable between a fully open position where said tube is free and a closed position where said tube is trapped between said jaws;
a heat sealing mechanism carried by said jaws to form a heat seal across the tube when said jaws are in said closed position;
a cutting mechanism carried by said jaws to cut the tube along the heat seal when the jaws are in the closed position to separate a container from the end of the tube; and
a container holding mechanism carried by the jaws, said container holding mechanism holding said container when said jaws begin moving from the closed position towards the fully open position in a manner to allow the container to rotate and take a desired orientation before said container is released.
